# EUROPEAN PATENT SPECIFICATION

(11) **EP 2 261 538 B1**
(45) Date of publication and mention of the grant of the patent: **07.03.2012**
(21) Application number: 10009938.1
(22) Date of filing: 08.07.2002
(51) Int. Cl.: F16K 11/14, F16K 11/074, F16K 31/53, F16K 3/08, F16K 31/04

(54) **Valve drive device**
Ventilantrieb
Dispositif d'entraînement de soupape

(30) Priority: 10.07.2001 JP 2001209220
(43) Date of publication of application: 15.12.2010
(62) Divisional of application: 02745871.0
(73) Proprietor: Nidec Sankyo Corporation, Nagano-ken 393-8511 (JP)
(72) Inventor: Hashimoto, Katsuo, Nagano 393-8511 (JP)
(74) Representative: Bray, Richard Anthony

(56) References cited:
- JP-Y- 61 016 461
- PATENT ABSTRACTS OF JAPAN vol. 2000, no. 15, 6 April 2001 (2001-04-06) & JP 2000 346227 A (PACIFIC IND CO LTD), 15 December 2000 (2000-12-15)

## Description

### Technical field

The present invention relates to a valve driving device for controlling open/close operation of a flow-path of fluid, for example, to control of a flow rate of refrigerant of a heat pump type refrigeration cycle, and more particularly, to a structure of a multi-way valve (electric expansion valve) by electric control.

### Background Art

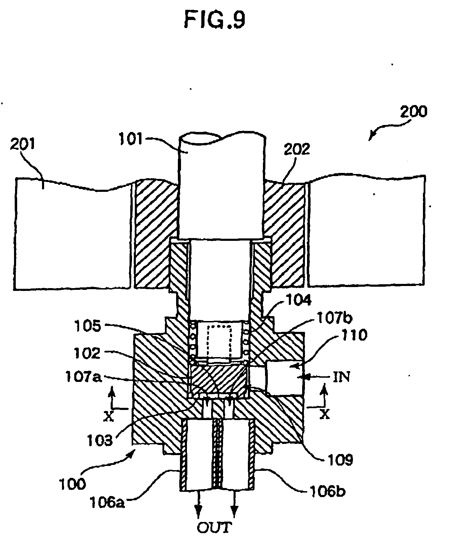

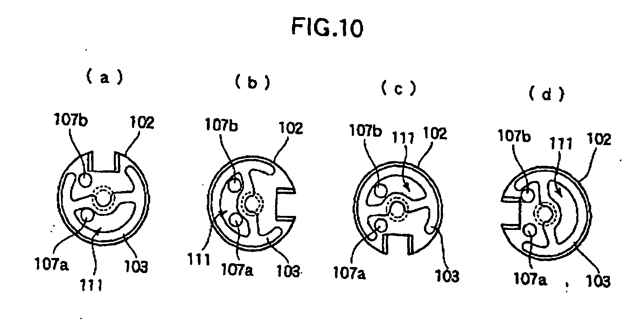

Various microprocessor-controlled electric expansion valves using stepping motors have been devised. Fig. 9 is a schematic partial sectional view of one example of a motor type refrigerant three-way valve (cross valve). Fig. 10 are plan views of an open/close state of the valve taken along a line X-X in Fig. 9. A three-way valve 100 is provided directly below a Stepping motor shown with a reference numeral 200 concentrically with the stepping motor 200, and a rotor 202 is driven by controlling currant of a stator 201. The rotor 202 is integrally provided with a rotating shaft 101, and a resin valve body 102 which rotates integrally with the rotting shaft 101 is slidably and concentrically connected an lower end of the rotating shaft 101. A rib 103 projects from a lower surface of the valve body 102, and the rib 103 is contacted to a valve seast 105 under pressure by a compression spring 104.

Communication holes 107a and 107b which are in communication with two pipes 106a and 106b are formed in the valve seat 105 such as to open in a valve chamber 109, the communication holes 107a and 107b are selectively brought into communication with an inflow hole 110 through the valve body 102 in the valve chamber 109. As shown in Figs. 10, the rib 103 has such a shape that surrounds a semicircular recess 111. and one valve body 102 switches a partition of the communication holes 107a and 107b in four modes in accordance with the rotation angle of the rotating shaft 101. That is, if one or both of the communication holes 107a and 107b provided at close two locations are surrounded by the semicircular recess 111, flow between the communication hole and the inflow hole 110 is cut off (closed), and the four modes of open/close states of the communication holes 107a and 107b at two locations shown in Figs. 10 can be selected by rotation angle of the rotating shaft 101.

Fig. 10(a) shows that the communication hole 107a is closed and the communication hole 107b is opened. Fig. 10(b) shows that both the communication holes 107a and 107b are closed. Fig. 10(c) shows that the communication hole 107a is opened and the communication hole 107b is closed. Fig. 10(d), shows that both the communication holes 107a and 107b are opened. In this manner, the valve body 102 is provided concentrically with the motor rotating shaft 101, the valve seat 105 is allowed to rotate under pressure at the same speed as that of the rotating shaft 101, and the four modes of the two communication holes 107a and 107b are switched.

In this structure, in order to incorporate the four modes of the two communication holes 107a and 107b in a range of one rotation of 360°, it is necessary to accommodate the two communication holes 107a and 107b in the open/close mode within a minimum angle capable of interrupting the communication holes from each other. Therefore, the two pipes 106a and 106b must be disposed in intimate contact with each other.

Disposition of the pipes 106a and 106b is limited to a narrow range around the rotor 101, brazing operation of the pipes 106a and 106b is difficult without beading the pipes, the diameters of the communication holes 107a and 107b must be small and thus, the communication holes may be clogged with brazing material, and it in difficult to increase the flow rate as described above. Further, in order to divine the two pipes 106a and 106b into the four modes within 306° by the one valve body 102 to switch the modes within a short distance, high precision parts axe required, which increases the costs.

It is known that if the flow rate of refrigerant is continuously controlled such that the flow rate is gradually decreased or increased by an expansion valve, the number of on/off switching operations is reduced, lifetime of the product is elongated, and temperature management with small variation can be carried out. In the illustrated structure, however, although it is possible to carry out the digital control for appropriately selecting one of a fully opened state and a fully closed state of the flow-paths of the two pipes 106a and 106b, it is impossible to continuously control the flow rate by gradually opening or closing the communication holes 107a and 107b at a rotation angle of the notating ahaft 101 in an analogue manner.

Further, in addition to the cramping load caused by the spring 104 which is required for preventing the medium from leaking, the one valve body 102 is forcibly rotated against a load of fluid flowing from the two communication holes 107a and 107b. Therefore, there is a problem that the valve body rib 103 is worn. Moreover, in the illustrated structure, When it is required to manage a temperature of two or more chambers, it is impossible to produce a multi-way valve more than three-way valve (cross valve) because the rotation angle can not further be divided by the one valve body 102.

In addition, in the structure in which the two communication holes 107a and 107b are controlled by the one valve body 102, it is impossible to independently control the flow rates of the two pipes 106a and 106b such that the flow rates are not interfered with each other. It is troublesome to limit the rotation of the rotor which sets a mechanical rotation origin (original point) of the valve body within the narrow valve chamber 109. Since it is difficult to provide the inflow hole 110 on the same plane as that of the two communication holes 107a and 107b, the inflow hole 110 is formed on a side surface by cutting. Therefor, in order to produce parts such as the valve chamber and the casing by presswork for reducing the costs in the above structure, there is a problem that the side surface must be processed without deteriorating the air-tightness.

In JP61016461, a hot water and water mixing faucet is disclosed which is provided with a hot water pipe 2 having a hot water valve 1 and a water pipe 4 having a water valve 3 and in which the hot water valve 1 and the water valve 3 are operated through gears 12 and 13 in reverse directions by a first servomotor 8 so as to be opened and closed

In this technique, for example, when the first servomotor 8 is rotated in a normal direction, the water valve 3 is operated from a fully opened state to a closing side and the hot water valve 1 is operated from a fully closed state to an opening side to obtain hot water at a desired temperature.

Thereupon, it is an object of the present invention to provide an electric multi-way valve in which the above problems are solved, a plurality of valve bodies disposed around the rotor are simultaneously driven, valve openings corresponding to respective valve bodies one-to-one are controlled.

### Disclosure of the Invention

To achieve the above object, the present invention provides a valve driving device comprising: a body having an inflow pipe into which fluid flows and an outflow pipe from which fluid flows, the inflow pipe and outflow pipe forming a portion of a flow-path of the fluid, the body having provided therein a valve opening which is in communication with the inflow pipe or the outflow pipe, the body further having provided therein a valve body for opening or closing the valve opening to interrupt or permit the flow of the fluid, and driving means for driving the valve body, wherein the valve driving device further comprises at least one more valve opening and at least one more valve body, the valve openings are respectively associated with the valve bodies one-to-one. According to the present invention, since all of one rotation of about 360° of the valve body can effectively utilized with respect to the control of the one outflow pipe with high degree of freedom without interference between the outflow pipe and the valve body, it is possible to independently control all of pipes in a suitable manner for precise control. Moreover, since a wide pressure receiving area of the valve body can be secured, the Wear is reduced, and the useful time of the valve body is increased. In addition, since the distance between the valve openings can be increased, a distance between the pipes can also be increased, the brazing operation can be carried out without bending the pipes and thus, productivity is enhanced. Since the valve opening can be increased in size, clogging of the brazing material is not caused at the time of welding, and it is easy to increase the flow rate of fluid.

The valve driving device further comprises a plurality of driven gears which respectively drive the plurality of valve bodies, and a driving gear, and all of the driven gears are disposed around the deriving gear such that all of the driven gears always commonly mean with the driving gear, the driving means drives the driving gear to drive all of the driven gears. Preferably, the number of teeth of the driving gear is set to such a value that the driving gear can be assembled later without moving the driven gear set to a predetermined position. Further, the driven gears are a gear train which is decelerated with respect to the driving gear, Since the opening is provided at a position separated away from the center, it is possible to open and close a large flow rate.

Further, et least two gears of the driving gear and the driven gears are provided with blocking sections which interfere with each other to limit the rotation so that the mechanical rotation original point of the value body is reliably set. Preferably, all of rotating shafte of the valve opening and the driven gears are developed and disposed at equal distances from a rotating shaft of the driving gear, More preferably, a valve seat against which the valve body abuts on the periphery of the valve opening is provided with a step and is formed into a recessed surface, and this recessed surface is formed into a smooth flat surface. Furthermore, the valve bodies gradually can open or close the valve openings respectively in correspondance with a rotation angle of the driven gear by an outline corresponding to a heart cam.

### Brief Description of the Drawings

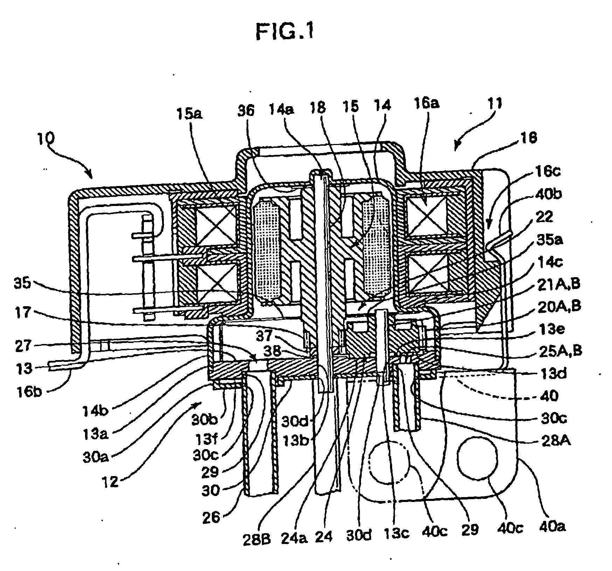

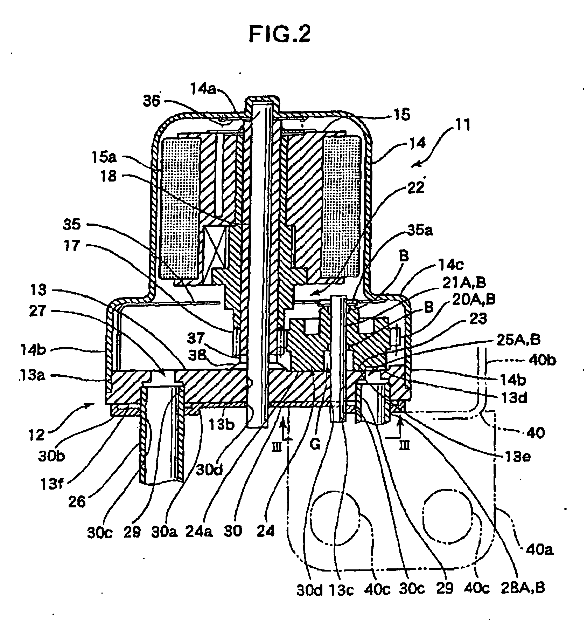

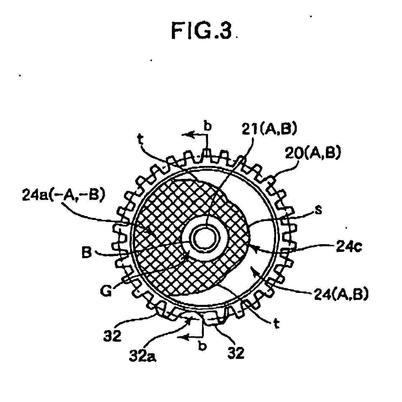

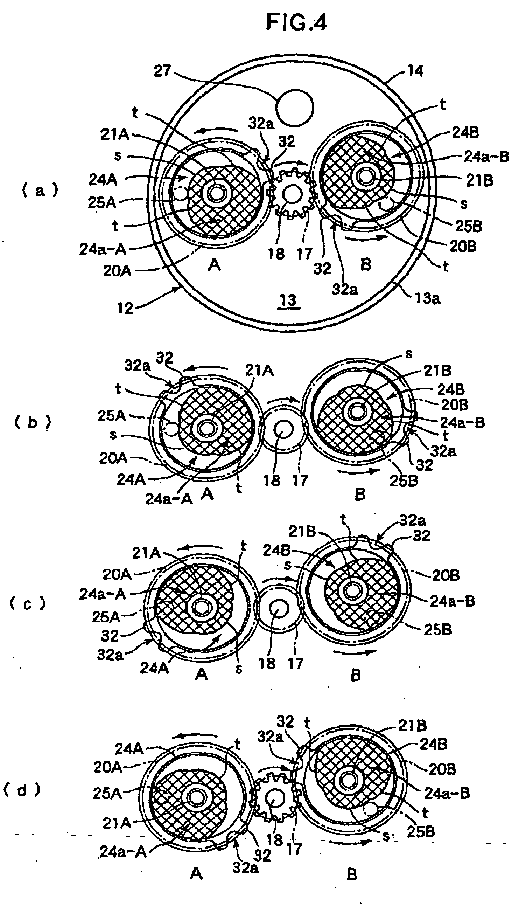

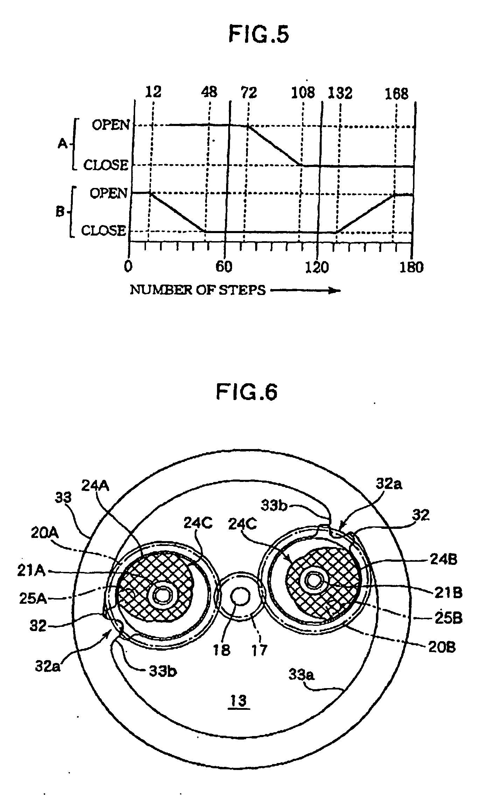

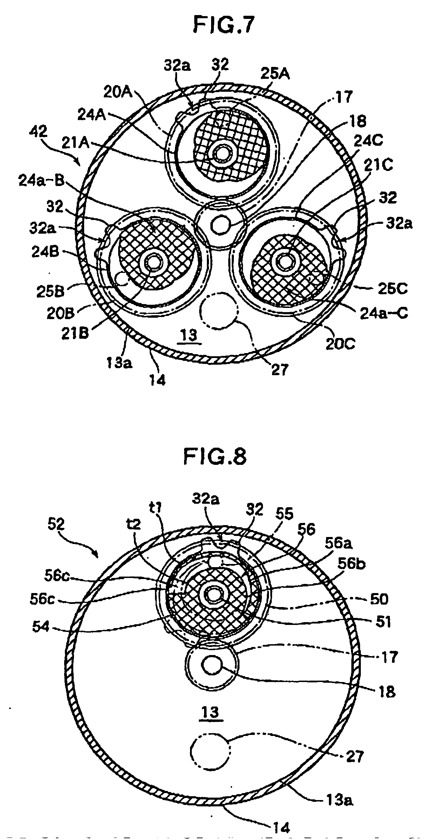

Fig. 1 is a side sectional view showing entire one embodiment of a three-way valve to which a valve driving device of the present invention is applied. Fig. 2 is a side sectional view showing the valve driving device of the invention. Fig. 3 is a plan view showing a first embodiment of a driven gear and a valve body pattern taken along a III- III line in Fig. 2. Figs. 4 are explanatory views of valve body open/close nodes in the valve driving device of the invention. Fig. 5 is a valve body open/close chart in the valve driving device of the invention. Fig. 6 is a plan view for explaining a setting operation of a relative position setting jig of two valve bodies in the valve driving device of the invention. Fig. 7 is a plan view for explaining disposition of a four-way valve (second embodiment) to which the valve driving device of the invention is applied. Fig. 8 is a plan view for explaining a valve body pattern of a two-way valve (third embodiment) to which the valve driving device of the invention is applied. Fig. 9 is a partial schematic sectional view showing one example of a conventional electric expansion valve. Figs. 10 are explanatory views of open/close modes of the electric expansion valve shown in Fig. 9.

### Best Mode for Carrying out the Invention

Embodiments of a valve driving device according to the present invention will be explained based on the drawings. Fig. 1 is a schematic vertical side sectional view showing the entire electric expansion valve 10. Fig. 2 is an enlarged vertical side sectional view of an example of the valve driving device 11 of the invention applied to a three-way valve. The valve driving device 11 is constructed on a press-formed metal valve seat plate and is hermetically sealed by a hermetically sealed case 14. A rotor 15 is provided in the hermetically sealed case 14 and is rotated by a stator 16 which is in tight contact with an outer side of the hermetically sealed case 14 such as to surround the case 14. A driving signal is input from a computer (not shown) to an electric conductor 16b connected to a fixed coil 16a of the stator 16, thereby controlling the rotation/stop at a predetermined angle of the rotor 15.

The rotor 15 is integrally provided at its outer periphery with magnets 15a. A pinion 17 is formed on an end of the rotor 15 closer to the valve seat plate 13. The rotor 15 is rotatably supported by a fixed rotor supporting shaft 18. A diameter of the hermetically sealed case 14 is reduced such that an outer peripheral surface of the magnet 15a of the rotor 15 and an inner peripheral surface of the stator coil 16a are adjacent to each other. The hermetically sealed case 14 is provided at its closed end with a recess 14a. One end of the supporting shaft 18 of the rotor 15 is fitted into the recess 14a to support the supporting shaft 18 stably. The diameter of the hermetically sealed case 14 on the side of the opened end 14b is increased to form a step 14c on which the stator 16 is placed. An inner surface of the diameter-increased opened end 14b is tightly fitted over a reduced-diameter peripheral edge portion 13a of a stepped outer periphery of the valve seat plate 13. If the opened end 14b of the hermetically sealed case 14 is fitted over the reduced-diameter peripheral edge portion 13a of the valve seat plate 13, a center hole 13b of the valve seat plate 13 and a fixed shaft supporting recess 14a of the hermetically sealed case 14 are concentrically aligned with each other.

Fixing holes 13c of supporting shafts 21A and 21B of two driven gears 20A and 208 (see Figs, 3) which mesh with the rotor pinion 17 as a common gear are formed in two positions of the valve seat plate 13 on the opposite sides of the center hole 13b. The driven gears 20A and 20B are rotatably supported by the supporting shafts 21A and 21B. A reference numeral B denotes a bearing bush. A step 13d is press-formed on the valve seat plate 13 at a circular boundary having slightly larger than outer diameters of the driven gears 20A and 20B around the driven gear supporting shaft fixing hole 13c, and a smooth flat surface 13e is dented in the circle to form a valve seat 23 (see Fig. 2). With this structure, it is possible to set surface relative roughness of the valve seat 23 which abuts against the sliding surface 24a that has a predetermined pattern and that is projected on the valve body 24 connected to lower surfaces of the driven gears 20A and 20B, within a limited range.

Communication holes 25A and 25B are formed in necessary positions in a circle which defines the two valve seats 23, thereby forming valve openings. Another communication hole 27 (see Figs. 4) which is in communication with an inflow pipe 26 is formed at an appropriate position on a radius line which intersects at right angles with a line connecting these communication holes (valve openings) 25A and 25B. These communication holes 25A and 25B are brought into communication with bottomed holes 29 which are formed by shallowly denting the pipe-mounting surface 13f that is on the opposite side from the valve seat 23 and in which first and second outflow pipes a 28A and 28B are fitted.

A pipe supporting plate 30 is fixed to the pipe-mounting surface 13f provided with the bottomed hole 29 on the opposite side from the valve seat 23 of the valve seat plate 13. The press-formed pipe supporting plate 30 is a thin metal plate. Three portions of the pipe supporting plate 30 including the inflow pipe 26 and the first and second outflow pipes 28A and 28B corresponding to the pips-fitting bottomed hole 29 are bent to form steps 30a, thereby forming a surface 30b which is separated away from the pipe-mounting surface 13f of the valve seat plate 13. Through holes 30c, which are brought into tight contact with outer diameters of the inflow pipe 26 end the first and a second outflow pipes 28A and 28B and have projection which support the pipes, are provided at positions aligning with the pipe-fitting bottomed holes 29. Trough holes 30d into which the supporting shafts 18, 21A and 21B are loosely fitted are formed in positions of the valve seat plate 13 corresponding to the center hole 13b and the supporting shaft firing hole 13c.

Total three shafts, i.e., the rotor supporting shaft (common gear supporting shaft) 18 and the two driven gear supporting shaft 21A and 21B are press-fitted into the center hole 13b and the supporting shaft fixing holes 13c from the side of the surface 13f of the valve seat plate 13 opposite to the valve sheet 23. Further, the three pipes, i.e., the inflow pipe 26 and the first and second outflow pipes 28A and 28B are fitted into the through holes 30c of the pipe supporting plate 30 uprightly. End surfaces of the pipes are allowed to seat on the bottomed holes 29 formed by denting the pipe-mounting surface 13f of the valve seat plate 13. Six portions to which the total six members are to be mounted from outside are welded or brazed from the surface 13f on the opposite side from the valve seat 23 to ensure the air-tightness. A long distance between the pipes can be obtained, and all of the inflow pipe 26 and the outflow pipes 28A and 28B are disposed on the same pipe mounting surface 13f. Therefore assembling and brazing operation from the same direction are facilitated, and the operability is enhanced and thus, the quality is stabilized.

Fig. 3 is a plan view showing a value body 24 (A, B) integrally formed with a driven gear 20 (A, B) as viewed from the valve seat taken along a III-III line in Fig. 2. A step is provided between a gear surface which is perpendicular to the shaft and a sliding surface 24a (A, B) shown with cross hetching which is the valve body 24 (A, B). The slicing surface 24a (-A, -B) comes into tight contact with a smooth valve seat surface 13e which is formed by denting a valve seat plate 13, and the sliding surface 24B (-A, -B) slides thereon. Therefore, the communication hole 25A, 25B is completely covered with the sliding surface 24a (-A, -B), and the flow-path which is in communication between the valve chamber 22 and the outflow pipe 28A, 28B is closed and isolated from the inflow pipe 26. A portion of teeth of the driven gear 20 (A, B) is out and a projection 32 which can not mesh with the rotor pinion 17 of the driving gear is provide. With this structure, it is possible to limit the rotation of the driven gear 20 (A, B) and to set an original point of actuation.

The number of teeth of the driven gear 20 (A, B) is larger than that of the driving gear (rotor pinion) 17, the rotation of the rotor 15 is decelerated and the driven gear 2D (A, B) is rotated. The number of teeth of the driving gear 17 is set to such a value that the driving gear can be assembled later without moving the driven gear set to a predetermined position. Since the rotation radius is increased by the driven gear 20 (A, B) and the driven gear 20 (A, B) controls only one communication hole, driving torque and wear are reduced, communication hole 25A. 25B having a large diameter is provided, and a large flow rate can be controlled. The one communication hole 25A (25B) is associated with the one valve body 24 (A, B), the communication hole 25A (25B) is provided within a moving radius of the valve body 24 (A, B) to control the opening and closing operation. Therefore, the one communication hole 25A (25B) can be controlled fully using the entire circumference of 360° of the one valve body 24 (A, B) and thus, many merits can be obtained.

Figs. 4 show open/close modes, through the valve seat plate 13, of the first communication hole 25A and the second communication hole 25B controlled by the first valve body (A)24A and the second valve body (B)24B. Fig. 4(a) shows that both the first communication hole 25A and second communication hole 25B are opened. Fig. 4(b) shows that the first communication hole 25A is opened and the second communication hole 25B is closed. Fig. 4(c) shows that both the first communication hole 25A and second communication hole 25B are closed. Fig. 4(d) shows that the first communication hole 25A is closed and the second communication hole 250 is opened. Outline patterns which define outer shapes of the valve bodies 24 (A, B) by steps with respect to the driven gears 20A and 20B have directional property. Therefore, it is necessary to set relative positional relation of rotation angles of the two valve bodies 24A and 24B in the four modes with respect to the first communication hole 25A and the second communication hole 25B.

Thereupon, a gear relative position setting jig 33 shown in Fig. 6 is used. This jig 33 is of a ring-shape, and has a surface 33a for defining an inner diameter thereof is formed along circumscribed circles of the outer diameters of the driven gears 20A and 20B of the first valve body 24A and the second valve body 24B. Projections 33b are formed on the jig 33 at positions corresponding to the inner diameter defining surface 33a. The projections 33b are fitted to positioning recesses 32a provided utilising two projections 32 which set the actuation original point of the driven gear. Using this jig 33, the positioning recesses 32a of the driven gears 20A and 20B are aligned with the projections 33b of the gear relative position setting jig 33, thereby setting a relative angle relation position of the driven gears 20A and 20B. More specifically, the gear relative position setting jig 33 is set to the valve seat plate, valve body sliding surfaces 24a-A, 24a-B of the driven gears 20A and 20B are directed to the valve seats 23, and the supporting shafts 21A, 21B fixed to the valve seat plates 13 are inserted to the driven gears 20A and 20B. Singe a gap G is formed by denting a lower end of each of the driven gears 20A and 20B as shown in Fig. 2, even if a welding brazing material cozes to a root of the supporting shaft 21 to form a thick portion, the rotation is not interfered.

In order to bring the valve body sliding surfaces 24a-A, 24a-B which are respectively integrally formed on the driven gears 20A and 20B into tight contact with the valve seats 23, branch arms 35a of one leaf spring member 35 are mounted such that the arms some into elastic contact with upper surfaces of the drive gears 20A and 20B (see Figs. 1 and 2). The rotor 15 which is integrally formed with the rotor pinion 17 is inserted through the supporting shaft 18 fixed to a central portion of the valve seat plate 13. The rotor pinion 17 which is a driving gear is allowed to reliably mesh with the driven gears 20A and 20B, the rotor 15 is assembled, and the gear relative position setting jig 33 is removed.

The entire valve seat 23 of the valve seat plate 13 including the rotor 15 is covered with the hermetically sealed case 14, the reduced-diameter peripheral edge portion 13a of the valve seat plate 13 is fitted into an inner surface of the opened end 14b of the hermetically sealed case 14, they are integrally formed by TIG welding and sealed, thereby forming the hermetical valve chamber 22. Free ends of the radially extending branch arms 35a of the one leaf spring member 35 which is previously mounted are pressed by an inner surface of the opened step 14a of the hermetically sealed case 14, the plurality of driven gears 20A and 20B are resiliently biased from their upper surface, and the valve body sliding surfaces 24a-A, 24a-B are brought into tight contact with the valve seats 23. In the hermetically scaled case 14, a washer 36 provided on an outer periphery of the recess 14a which supports one end of the rotor supporting shaft 18 on the side of the closed end pushes an upper end of the rotor 15 to press a spring washer 38 through a collar 37 inserted into a lower surface of the rotor pinion 17. Therefore, an axial clearance of the rotor 15 is absorbed by resilient deformation of the spring washer 38, and it is possible to ensure smooth rotation of the rotor 15 without rattle.

Then, a stator positioning frame 40 which also functions as a mounting seat 40a of the electric expansion valve 10 is fixed to a predetermined position on an outer surface of the pipe supporting plate 30 fixed to the valve seat plate 13, a positioning engaging tool 40b is engaged with a recess 16c specified for the stator 16. In a positional relation of an outermost tooth (not shown) of the stator of the driven gear 20A with respect to the mechanical actuation original point by the rotation limiting projection 32, after an original point of a computer input signal is matched, a positional relation of the stator 16 with respect to the rotor 15 is not allowed to move. A reference numeral 40e represents a bolt hole through which the electric expansion valve 10 is mounted to another device.

Next, the operation of the three-way valve 12 of the valve driving device 11 according to the present invention will be explained in comparison with Figs. 4 and 5 based on a case in which the rotor pinion 17 of the driving gear is rotated clockwise. In Fig. 4(a), the first driven gear (A)20A is located at the actuation original point, i.e., at a step 0 shown in Fig. 5, and the first communication hole 25A is opened. From here, the first driven gear (A)20A rotates counterclockwise, but since the outline pattern of the valve body sliding surface 24a-A is along an arc a formed around the supporting shaft 21A up to a step 72 in Fig. 5, the first driven gear (A)20A in Fig. 4(b) which shows the vicinity of a step 60 in Fig. 5 maintains an opened state of the first communication hole 25A.

The first driven gear (A) 20A rotates counterclockwise from the position shown in Fig. 4(b) to a step 72 shown in Fig. 5 and then, the first driven gear (A) 20A starts closing along a heart cam curve (Archimedean spiral) t up to a step 108 while gradually reducing its opening area substantially in proportion to a rotation angle. After the step 108, the first driven gear (A)20A passes through a step of about 120 shown in Fig. 4(c) and moves to a position before the rotation of the second driven gear (B)20B is limited by the projection 32 as shown in Fig. 4(d) below a limit of rotation by the computer control, and the complete closed state of the first communication hole 25A is maintained.

On the other hand, in the case of the value body 24B of the second driven gear (B) 20B, when the first driven gear (A) 20A is in the step 0 which is the actuation original point in Fig. 4(a), the second communication hole 25B is opened. Then, the second driven gear (B) 20B is rotated counterclockwise, and from a step 12 in Fig. 5, the second communication hole 25B starts closing such as to gradually reducing its opening area substantially in proportion to the rotation angle. In the vicinity of a step 60 in Fig. 5 shown in Fig. 4(b), the second communication hole 25B is completely closed. In this state, this closed state of the second communication hole 25B is maintained up to a step 132. Fig. 4(c) shows the vicinity of a step 120 in Pig. 5. Fig. 4(c) shows that the second communication hole 25B is closed.

By further rotation, the opening area of the second communication hole 25B is again gradually opened along the heart cam curve t up to a step 168 substantially in proportion to the rotation angle, and the opening area is fully opened at a limit position shown in Fig. 4(d). By selecting the shape and the rotation angle of the valve body 24 while combining them with a rotation phase between the first driven gear 10A and the second driven gear 20B in this manner, it is possible to construct various open/close modes for the first and second communication holes 25A and 25B.

Fig. 7 is a plan view of disposition of valve bodies 24A, 24B, 24C and communication holes 25A, 25B, 25C of a second embodiment in which the valve driving device 11 of the invention is applied to a four-way valve 42. The Fig. 7 shows the disposition as viewed from the same direction as Figs. 4. The first, second and third driven gears 20A, 20B and 20C are disposed radially around the supporting shaft 18 of the rotor pinion 17 at equal distances from one another. The first, second and third communication holes 25A, 25B and 25C are disposed on radial lines. Members which are the same as those in the embodiment to which the three-way valve 12 is applied are designated with the came symbols, and explanation thereof is omitted. In steed of the suffix letters A and B used for the first and second communication holes, a letter C is added tc symbols of members related to the added communication hole 25C. It can easily be expected that based on the illustrated radial arrangement in this embodiment, it is possible to improve a multi-way valve capable of handling more control circuits by changing a diameter of the driven gear and the meshing position in the axial direction.

Fig. 8 shows a third embodiment in which the valve driving device of the invention is applied to a two-way vale 52. An opening adjusting angle range of the communication hole 55 can be set greater as compared with the three-way valve 12 or the four-way valve 42. Therefore, a valve body 54 is formed with a valve seat sliding pattern 54a not only for the purpose of merely ON/OFF controlling but also for the purpose of opening or losing the opening area substantially in proportion to the rotation angle. If this structure is applied to the electric expansion valve, it is possible to finaly adjust a temperature precisely with small variation. As the valve seat sliding pattern 54a of the valve body 54, opposite edges 56a and 56b of a groove 56 are formed by two heart can curves t1 and t2 which gradually closes the communication hole 55 from opposite sides or gradually opens the communication hole 55, and an opened end of the groove 56 is provided with an opening 56d which is in communication with a valve chamber.

As the embodiments of the valve driving device according to the present invention, the three-way valve 12 is explained as a main subject and the four-way valve 42 and the two-way valve 62 are explained as its application examples, but the present invention is not limited to the above illustrated embodiments. According to the structure of the invention that the valve bodies 24 are disposes radially around the rotor pinion 17 and the communication holes are respectively associated with the valve bodies one-to-one, the four-way valve 42 can be formed into a multi-way valve if necessary, and it is expected that the shapes and structures thereof can variously be changed and the parts can variously be reconstructed concerning detailed portion within a range not departing from the essential constituent requirements of the present invention.

### Industrial Applicability

As apparent from the above explanation, the valve driving device of the invention comprises : a body having an inflow pipe into which fluid flows and an outflow pipe from which fluid flows, the inflow pipe and outflow pipe forming a portion of a flow-path of the fluid, the body having provided therein a valve opening which is in communication with the inflow pipe or the outflow pipe, the body further having provides therein a valve body for opening or closing the valve opening to interrupt or permit the flow of the fluid; and driving means for driving the valve body, wherein the valve driving device further comprises at least one more valve opening and at least one more valve body, the valve openings are respectively associated with the valve bodies one-to-one. Since all out one rotation of about 360° of the valve body can effectively utilized with respect to the control of the one outflow pipe, with high degree of freedom without interference between the outflow pipe and the valve body, it is possible to independently control all of pipes in a suitable manner for precise control. Further, since a wide pressure receiving area of the valve body can be secured, the wear is reduced, and the useful time of the valve body is increased. In addition, since the distance between the valve openings can be increased, a distance between the pipes can also be increased, the brazing operation can be carried out without bending the pipes and thus, productivity is enhanced, Since the valve opening can be increased in size, clogging of the brazing material is not caused at the time of welding, and it is easy to increase the flow rate of fluid.

## Claims

1. A value driving device (11) comprising:
a body (13, 14) having an inflow pipe (26) into which fluid flows and an outflow pipe (28A, 28B) from which fluid flows, the inflow pipe (26) and outflow pipe (28A, 28B) forming a portion of a flow-path of the fluid, the body (13, 14) having provided therein a plurality of valve openings (25A, 25B) which are in communication with the inflow pipe (26) or the outflow pipe (28A, 28B), the body (13, 14) having further provided therein a plurality of valve bodies (24A, 24B) for opening or closing the valve openings (25A, 25B) to interrupt or permit the flow of the fluid, the valve openings (25A, 25B) being respectively associated with the valve bodies (24A, 24B) one-to-one; driving means having a driving gear (17) and a plurality of driven gears (20A, 20B) which respectively drive the plurality of valve bodies (24A, 24B), all of the driven gears (20A, 20B) being disposed around the driving gear (17) such that all of the driven gears (20A, 20B) always commonly mesh with the driving gear (17), the driving means being arranged to drive the driving gear (17) to drive all of the driven gears (20A, 20B),
**characterized in that**
each of the driven gears (20A, 20B) is provided with a positioning portion which is arranged to set a relative angular position of the respective driven gears (20A, 20B) to the driving gear (17), the positioning portion comprising a positioning recess (32a).

2. A valve driving device according to claim 1 wherein the positioning recess (32a) is formed between two projections (32).

## Patentansprüche

1. Ventilantrieb (11), umfassend:
einen Körper (13, 14) mit einem Zuflussrohr (26), in das Fluid strömt, und einem Ausflussrohr (28A, 28B), aus dem Fluid strömt, wobei das Zuflussrohr (26) und das Ausflussrohr (28A, 28B) einen Abschnitt eines Strömungsweges des Fluids bilden, wobei der Körper (13, 14) darin eine Vielzahl von Ventilöffnungen (25A, 25B) aufweist, die in Verbindung mit dem Zuflussrohr (26) oder dem Ausflussrohr (28A, 28B) sind, wobei der Körper (13, 14) außerdem eine Vielzahl von Ventilkörpern (24A, 24B) für das Öffnen oder Schließen der Ventilöffnungen (25A, 25B) darin aufweist, um die Strömung des Fluids zu unterbrechen oder zuzulassen, wobei die Ventilöffnungen (25A, 25B) jeweils mit den Ventilkörpern (24A, 24B) eins zu eins verbunden sind; Antriebsmittel, die ein Antriebsrad (17) und eine Vielzahl von Abtriebsrädern (20A, 20B) aufweisen, die jeweils die Vielzahl der Ventilkörper (24A, 24B) antreiben, wobei alle Abtriebsräder (20A, 20B) um das Antriebsrad (17) herum so angeordnet sind, dass alle Abtriebsräder (20A, 20B) immer gemeinsam mit dem Antriebsrad (17) in Eingriff kommen, wobei die Antriebsmittel angeordnet sind, um das Antriebsrad (17) anzutreiben, um alle Abtriebsräder (20A, 20B) anzutreiben,
**dadurch gekennzeichnet, dass**
ein jedes der Abriebsräder (20A, 20B) mit einem Positionierabschnitt versehen ist, der angeordnet ist, um eine relative Winkelposition der jeweiligen Abtriebsräder (20A, 20B) zum Antriebsrad (17) einzustellen, wobei der Positionierabschnitt eine Positioniervertiefung (32a) umfasst.

2. Ventilantrieb nach Anspruch 1, wobei die Positioniervertiefung (32a) zwischen zwei Vorsprüngen (32) gebildet ist.

## Revendications

1. Dispositif d'entraînement de soupape (11), comprenant :
un corps (13, 14) comportant un tuyau d'arrivée (26), dans lequel le fluide s'écoule, et un tuyau d'échappement (28A, 28B), à partir duquel le fluide s'écoule, le tuyau d'arrivée (26) et le tuyau d'échappement (28A, 28B) constituant une partie d'une trajectoire d'écoulement du fluide, le corps (13, 14) comportant plusieurs ouvertures de soupape (25A, 25B) en communication avec le tuyau d'arrivée (26) ou le tuyau d'échappement (28A, 28B), le corps (13, 14) comportant en outre plusieurs corps de soupape (24A, 24B) pour ouvrir ou fermer les ouvertures de soupape (25A, 25B) afin d'interrompre ou de permettre l'écoulement du fluide, les ouvertures de soupape (25A, 25B) étant respectivement associées de manière individuelle aux corps de soupape (24A, 24B) ; un moyen d'entraînement comprenant une roue motrice (17) et plusieurs roues menées (20A, 20B) entraînant respectivement les plusieurs corps de soupape (24A, 24B), toutes les roues menées (20A, 20B) étant agencées autour de la roue motrice (17), de sorte que toutes les roues menées (20A, 20B) sont toujours engrenées en commun dans la roue motrice (17), le moyen d'entraînement étant agencé de sorte à entraîner la roue motrice (17) afin d'entraîner toutes les roues menées (20A, 20B) ;
**caractérisé en ce que**
chacune des roues menées (20A, 20B) comporte une section de positionnement agencée de sorte à régler une position angulaire relative des roues menées respectives (20A, 20B) par rapport à la roue motrice (17), la section de positionnement comprenant un évidement de positionnement (32a).

2. Dispositif d'entraînement de soupape selon la revendication 1, dans lequel l'évidement de positionnement (32a) est formé entre deux saillies (32).
